# Bureau Gevers

**société anonyme**   **naamloze vennootschap**

BREVETS — MARQUES — MODELES — LICENCES
OCTROOIEN — MERKEN — MODELLEN — LICENTIES
PATENTS — TRADEMARKS — DESIGNS — LICENCES

PE268112  PN/NM

**3-1050 BRUXELLES-BRUSSEL (BELGIQUE-BELGIE)**
Rue de Livoume 7, B 1.
Tél. (02) 538 91 80 (10 l.) - Télex Bruxelles 26.407
Banque Bruxelles Lambert : 310-0260180-15
C.C.P. : 000-0000057-57
Adr. télégr. : GEVERSECO-BRUXELLES
Copieur autom. Gll & Glll - Tél. (2) 5389181
R.C. Bruxelles 401.957
T.V.A. 416.667.656

**3-2000 ANTWERPEN (BELGIE-BELGIQUE)**
Aalmoezenierstraat 70
Tel. (03) 231 56 56 (4 l.) - Telex Antwerpen 31.093
Bank Brussel Lambert : 310-0260180-15
P.C.R. : 000-0000057-57
Telegr. adres : JACQGEVERS-ANTWERPEN
Autom. copier Gll & Glll - Tel. (2)5389181
H.R. Antwerpen 207.862
B.T.W. 416.667.656

EUROPEAN   PATENT   OFFICE
Branch at the Hague
Receiving Section
P.B. 5818 Patentlaan, 2

NL-2280 HV RIJSWIJK ZH
Nederland

Brussels, November 16, 1987

REGISTERED

O/Ref. : V 350.375          Y/Ref. : 87202076.3

Dear Sirs,

**2 0. 11. 87**

European Patent Application No. 87202076.3 of October 28, 1987, in the name of HISPANO QUIMICA S.A. for : "Process for obtaining soundproof and thermal insulation panels".

Some minor errors exist in the specification filed for this case.

On page 2, line 7, of the specification in English, the word "cationic" should be replaced by "anionic". This error is obvious due to line 24 of page 1.

On page 5, line 31-32, "... of the filter has been filtered ...", should be replaced by "... of the filter has been collected ...", as appearing in the certified copy of the original Spanish patent application and in its translation.

On page 6, line 4, 4th column of the table, "tenshe" should be read "tensile".

On page 8, 2nd line of claim 1, "... with a suspension ..." should be "... from a suspension ...".

./..

On page 8, line 4, "water fillings or charges ..." should be read : "... fillings or charges in water ...".

Both last changes are simple translation mistakes.

We would like that these evident errors are taken into consideration.

Kindly return the annexed acknowledgment.

Sincerely yours.

For Bureau GEVERS S.A.

J. PIRSON

Europäisches Patentamt

European Patent Office

Office européen des brevets

(11) Publication number: **0 301 137**
**A2**

(12) **EUROPEAN PATENT APPLICATION**

(21) Application number: 87202076.3

(22) Date of filing: 28.10.87

(51) Int. Cl.⁴: **C04B 28/24** , //(C04B28/24,
14:38,18:24,24:38)

A request for correction ...... has been filed pursuant to Rule 88 EPC. A decision on the request will be taken during the proceedings before the Examining Division (Guidelines for Examination in the EPO, A-V, 2.2).

(30) Priority: 31.07.87 ES 8702251

(43) Date of publication of application:
**01.02.89 Bulletin 89/05**

(84) Designated Contracting States:
**AT BE CH DE ES FR GB GR IT LI LU NL SE**

(71) Applicant: **HISPANO QUIMICA S.A.**
**Paseo Zona Franca 61-67**
**E-08004 Barcelona(ES)**

(72) Inventor: **Talavera Noguera, Julio**
**rue Artesania 78**
**Barcelona(ES)**
Inventor: **Valls Enrich, Ramon**
**rue Muntaner 499**
**Barcelona(ES)**
Inventor: **Celades Colom, Roberto**
**rue Muntaner 326**
**Barcelona(ES)**

(74) Representative: **Modrie, Guy et al**
**Bureau Gevers SA 7, rue de Livourne Bte 1**
**B-1050 Bruxelles(BE)**

(54) **Process for obtaining soundproof and thermal insulation panels.**

(57) The present invention deals with a process of manufacturing soundproof and thermal insulation panels based upon a suspension of vegetal, mineral fibres and water charges, which comprises addition to said suspension, first of colloidal silica of a specific surface and then of cationic starch with a substitution range of from 0.05 to 0.1 and at a dose of from 0.1 and 15% with respect to the dry weight of fibres and fillings, controlling the addition of the cationic starch by means of determination of the electrokinetic potential of the fibres and charges so that said potential value is maintained between 5 mV and -5 mV, this suspension containing silica and cationic starch being finally filtered to eliminate water, forming the humid panels which are afterwards heat dried.

EP 0 301 137 A2

## "Process for obtaining soundproof and thermal insulation panels"

This invention relates to improvements to the process for obtaining thermal and sound insulation panels.

In the construction of buildings and dwellings, thermal and sound insulation of the walls and ceilings is most important. For this purpose, there were used different sorts of materials which have evolved along the time as to the proper necessities of the increase of standard of living.

One of the commonly used materials are the soundproofing and thermal insulation panels. These panels of square or rectangular configuration and of variable thickness are formed of different materials, such as fillings and/or mineral pigments, fibres of mineral, vegetal or synthetical origin, natural and/or synthetical binding materials, and other additives.

The process in which a suspension of fibres and fillings mixed up with a binding material in an aqueous medium is introduced continuously onto a cloth fabric which allows the water and part of the most fine components to pass through is well known. At the upper part of the fabric there is formed a panel of humid fibres which are pressed and then dried.

The present invention provides a new process for obtaining soundproofing and thermal insulation panels, using a new system of binding material and of retention of fibres and fillings. The process deals with use of a dual system of retention by using two additives : one anionic additive and another one of cationic nature. These two additives act at the same time as retainers and binding materials of the fibres and fillings,use of an additional binding material to increase the physico-mechanical features being also possible.

By means of the process of the present invention, it is possible to obtain panels with excellent physico-mechanical strength, obtaining at the same time very high retention values during manufacturing, all this by using less retention/binding additives than in the conventional processes where the necessary amount of binding material to get the same resistances is much higher.

The retention system of the present invention is based upon the combined action of an additive of cationic character which is a colloidal silica, and of an additive of cationic character which is the cationic modified starch. The combined effect of these two additives is so perfect that it does not only act onto the manufacturing machine but also shows a strong binding power. This binding power is a synergistic effect which none of the two additives could give separately.

The global dose of the combination of the two before cited additives is in the range of from 0.5 to 10% by weight of the dried panel. At this dose, the resulting panel shows a quite high level of resistance which can be increased by adding a binding material such as native starch. Assuming an additional binding material is added, the physico-mechanical resistances of the panels are much higher by using the process of the present invention than when only using the binding material in the conventional process, even in much higher doses.

In the process of the present invention, it is essential to maintain the correct balance of both additives by the control of the total retention of the machine and/or more preferably of the electrokinetic potential of the draining waters.

Use of the colloidal silica as binding material of inorganic fibres may be found in several published patents. Use of colloidal silica in the refractory and fireproof materials, acting as binding material and/or filling material, is well disclosed. Some of the prior references are cited hereinafter. United States Patent No. 3,224,927 specifies use of collodial silica in doses of from 10 to 20% with respect to the fibres as binding material in manufacture of fireproof materials. British Patent No. 1109867 describes use of colloidal silica as binding material of aluminum silicate particles together with other binding materials. European Patent 77444 describes obten tion of fireproofing materials composed of inorganic products, while using as binding material a phenolic resin, besides colloidal silica and a flocculent. German Patent 1644710 deals with use of colloidal silica as filling material.

In all these before cited prior art documents, colloidal silica is not used as retainer of fibres and fillings in the process of manufacturing soundproof and thermal insulation panels. With regard to the process of the present invention, doses of colloidal silica are lower than the ones such as disclosed,activation of the colloidal silica together with the cationic starch being essential in this process. In this invention, not only the combined use of the two products but also the correct dosage and more particularly the control of balance of both products by means of the electrokinetic potential of the draining waters and/or retention are important. This last control allows to obtain retention and resistance values of the panels with much lower doses than the doses specified up to now for retainers as well as for binding materials.

By means of the present invention and, on one hand, due to the better retention of fibres and fillings during the manufacturing process and, on the other hand, due to an important improvement of the resistances and binding power, it is possible to reduce the global amount of the binding material, allowing a better economical yield due to reduction of the binding material and less contamination in the draining waters of the manufacturing machine.

The materials used for manufacturing the panels of the present invention are a mixture of fibres and/or fillings. Fibres can be of mineral origin, such as glass fibres, mineral wool, or of vegetal origin, such as cellulosic fibres from wood or annual vegetals such as esparto, flax, begza, etc.; these vegetal fibres can directly proceed from the process of obtention of paper paste or old recovered paper. Mineral fillings can be of different sorts, such as calcium sulphate, kaolin, calcium carbonate, and the like. During the process of manufacturing, fibres and fillings are intimately mixed in an aqueous solution at a concentration of from 0.01 to 10%, preferably at 0.5%. This fibre suspension after having been mixed with the binding material and the retention system, subject of the present invention, is introduced into the manufacturing machine onto the drainage fabric where most part of the water passes through this fabric, forming a humid panel on this drainage fabric. The thickness of the panel is adjustabled as to the concentration of the suspension feeding the machine, speed of the cloth, and feeding volume of the fibre and filling suspension. The panels once formed pass through a hot air drying system to eliminate the remaining water.

Use of glass fibres or mineral wool as major fibrous components provides the panels with the additional advantage of not being combustible. Due to the fact that the main use of said panels is as materials in the construction of houses and buildings, this feature of not being combustible can be quite imperious in many cases. By means of the process of the present invention, use of glass fibres from any source is extraordinarily beneficial due to the great affinity of the retainer system (colloidal silica/cationic starch) with the mineral fibres.

The colloidal silica as used has a specific surface of from 100 to 1000 $m^2/gr$, and more preferably the average size of a silica particle should oscillate between 5-15 nm. The point of addition of the silica in the manufacturing process should preferably be before adding the cationic starch and before the suspension of fibres and fillings enters into the cloth. The addition is to be performed in such way that fibres and fillings get well distributed with the particles of colloidal silica. The doses of colloidal silica are in the range of from 0.01 and 5% by dry weight of the panel. The doses of use are in the range of from 0.1 to 15% with respect to the weight of the panel.

The correct dose of silica and cationic starch is most important in the present invention. Due to the anionic feature of the fibres and silica, during the mixture of fibres/silica no flocculation occurs and only when adding the cationic starch and due to the opposed ionic character, there is produced a coagulation and flocculation effect. For each type of fibre and filling suspension and silica amount as used, there is an optimum level of cationic starch. This optimum level of point can be known by different processes such as maximum drainage, maximum retention or by control of the potential Z in the draining waters. This last mentioned process is specially effective and easy to control. The potential Z of the waters is negative before adding the cationic starch and a value null or very close to 0 should be obtained to get best results. Dose of cationic starch giving a potential Z zero in the draining waters corresponds to the best dose of cationic starch.

Physico-mechanical resistances of panels depend on the fibre and filling composition and the global amount of added silica and cationic starch, always maintaining the best relation between both. It is also possible to increase the physical resistance features of panels by adding a binding material as for instance the natural or native starch. The relative doses of the retaining system of the present invention with another binding material depend on the repective economical balances.

The following examples illustrate the process of the present invention.

Example No. 1

This example illustrates the efficiency of the retention system based on colloidal silica and cationic starch and the importance of the correct dose of the cationic starch. There will be also observed the important correlation between the potential Z of the draining waters and the retention.

Composition of the fibres and fillings:

mineral wool 70%
vegetal fibres 10%
mineral charges/kaolin 20%

A mixture of the before cited composition at 2% in water has been prepared. Colloidal silica has first been added and then the cationic starch. One kg of the former suspension has been filtered through a metallic fabric : the upper part of the filter has been filtered and then dried and weighed to calculate the retention. The filtered waters have been used for determining the potential Z.

## Results

| % Colloidal Silica | % Cationic Starch | Retention | Potential Z |
|---|---|---|---|
| - | - | 40% | -15 mV |
| 0.2% | - | 45% | -20 mV |
| 0.2% | 0.25% | 55% | -12 mV |
| 0.2% | 0.50% | 75% | - 6 mV |
| 0.2% | 0.75% | 87% | - 2 mV |
| 0.2% | 1% | 93% | 0 mV |
| 0.2% | 1.25% | 90% | + 3mV |

The optimum retention value corresponds to 0.2% of colloidal silica and 1% of cationic starch. This optimum value coïncides with a potential Z zero of the drainage waters.

## Example No. 2

This example illustrates the effect of the remarkable improvement of the binding power of the process subject of the present invention in comparison with the conventional process.

The same composition as cited in Example No. 1 has been used and the forms as obtained were subjected to tests of tensile resistance. Besides the silica and the cationic starch, different amounts of native starch as an additional binding material were added.

## Results

| Native starch | Colloidal silica | Cationic starch | Tenshe resistance |
|---|---|---|---|
| - | - | - | 0 - 0.2 K |
| - | 0.2% | 1% | 2 K |
| 2% | 0.2% | 1% | 2.7 K |
| 3% | 0.2% | 1% | 3.6 K |
| 4% | 0.2% | 1% | 4.8 K |
| 5% | 0.2% | 1% | 5.3 K |
| 6% | 0.2% | 1% | 5.9 K |
| 8% (+) | - | - | 3.8 K |

(+) a polyacrylamide has been used for the retention.

The dual retention system based on colloidal silica and cationic starch had a binding effect by itself, but by adding 3% of starch it was possible to obtain the same resistances as with 8% of starch while using in this last case a conventional retention process.

### Example No. 3

This example shows the results obtained during an industrial test by using the process detailed in this invention.

Production of the machine is of 1 ton/hour of panels. The mixture of fibres and fillings has first been prepared to give a suspension at a 0.3% concentration. To the feeding line of the machine where said suspension circulates, there were continuously added first the native starch as additional binding material and afterwards the colloidal silica and the cationic starch. The dose of cationic starch was adjusted by measuring the potential Z of the draining waters until obtaining a null potential Z value.

Composition of fibres and fillings:

Mineral fibres 65%
Recovered paper 15%
Mineral fillings 20%
The results obtained are summarized in the following table :

| Native Starch | Colloidal Silica | Cationic Starch | Retention | Potential | Resistance |
|---|---|---|---|---|---|
| 8% | - | - | 82% | -15 mV | 1.97 |
| 3% | 0.18% | 0.63% | 96% | 0 mV | 1.96 |

With the retention system, colloidal silica/cationic starch, it was possible to reduce the starch consumption from 8% to 3% without losing resistance and with a considerable increase of the retention, resulting in very clear waters with a considerable diminution of the contamination.

## Claims

1. Process for manufacturing soundproof and thermal insulation panels with a suspension of vegetal, mineral fibres and water fillings or charges, at a concentration of from 0.01% to 10%, with optional addition of native or natural starch to give a higher resistance to the panels, characterized in that this process comprises the following detailed steps :

A - First, addition to the suspension, of colloidal silica of a specific surface of from 100 to 1000 $m^2/g$ and at a dose of from 0.01 to 5% with respect to the dry weight of the fibres and fillings,

B - then, adding cationic starch with a substitution range of from 0.05 to 0.1 and at a dose of from 0.1 to 15% with respect to the dry weight of fibres and fillings, controlling the addition of the cationic starch by means of determination of the electrokinetic potential of the fibres and charges so that this potential value is being maintained between 5 mV and -5mV, and

C - finally, filtering this suspension containing the silica and the cationic starch, to eliminate the water and to form the humid panels which are then heat dried.

2. Process according to Claim 1, characterized in that the value of the electrokinetic potential of the average particles in the draining waters is between + 5 and - 5 mV.

3. Process according to claim 1 or 2, characterized in that the fibres are preferably glass fibres, mineral wool, asbestos, aluminosilicates, or mixtures thereof.

4. Process according to any of the claims 1 to 3, characterized in that mineral fillings are preferably kaolin, calcium sulphate, calcium carbonate or talc, of mixtures thereof.

5. Process according to any of claims 1 to 4, characterized in that to the water suspension of fillings and fibres, there is added natural or native starch to give a higher resistance to the panels, this in a dose of from 1 to 15% with respect to the weight of the panels.